# EUROPÄISCHE PATENTSCHRIFT

(11) **EP 0 614 756 B1**
(45) Veröffentlichungstag und Bekanntmachung des Hinweises auf die Patenterteilung: **01.07.1998**
(21) Anmeldenummer: 94102897.9
(22) Anmeldetag: 25.02.1994
(51) Int. Cl.: B32B 27/32

(54) **Mehrschichtige, gereckte, heisssiegelbare Polypropylenfolie**
Multilayered, stretched, heat-sealable polypropylene film
Feuille multicouche étirée thermosoudable en polypropylène

(30) Priorität: 10.03.1993 DE 4307440
(43) Veröffentlichungstag der Anmeldung: 14.09.1994
(73) Patentinhaber: WOLFF WALSRODE AKTIENGESELLSCHAFT, D-29699 Walsrode (DE)
(72) Erfinder: Brandt, Rainer, Dr., D-29664 Walsrode (DE); Reiners, Ulrich, Dr., D-29643 Neuenkirchen (DE); Krallmann, Anton, Dipl.-Ing., D-29683 Fallingbostel (DE); Neelen, Neele, Dr., D-29683 Fallingbostel (DE); Böhner, Jürgen, Dipl.-Ing., D-29699 Bomlitz (DE)
(74) Vertreter: Braun, Rolf, Dr.

(56) Entgegenhaltungen:
- EP-A- 0 222 295
- EP-A- 0 468 333
- DE-A- 3 940 173

## Beschreibung

Die Erfindung betrifft eine mehrschichtige, gereckte, heißsiegelbare Polypropylenfolie mit verbesserter Wasserdampfsperrwirkung. Die, die Erfindung betreffende Folie weist als kennzeichnende Merkmale eine Basisschicht aus hochisotaktischem Polypropylen und Kohlenwasserstoffharz, zwei die Basisschicht ummantelnde Schichten (die in Zukunft Mantelschichten genannt werden) aus hochisotaktischem Polypropylen, frei von Kohlenwasserstoffharz, und zwei heißsiegelfähige Deckschichten aus einem olefinischen Co- oder Terpolymer auf. Der Gegenstand der vorliegenden Erfindung stellt eine Präzisierung des gegenstands der mit gleichen Prioritätsdatum eingereichten EP 0 614 758 dar.

Die Anwendung von Kohlenwasserstoffharzen zur Modifikation von Polypropylenfolien ist Gegenstand vieler Anmeldungen.

In EP-B 247 898 wird eine Polypropylenfolie beschrieben, die durch Zusatz von Kohlenwasserstoffharz verbesserte mechanische und optische Eigenschaften aufweist; zusätzlich werden verbesserte Barriereeigenschaften gegen Wasserdampf und Sauerstoff beschrieben.

In EP-A 468 333 wird eine kohlenwasserstoffharzhaltige, dreischichtige Polypropylenfolie beschrieben, die verbesserte Barriereeigenschaften hinsichtlich Wasserdampf und Sauerstoff bei gleichzeitig verbesserter Maschinengängigkeit hat.

In EP-B 217 388 wird eine kohlenwasserstoffharzhaltige Polypropylenfolie beschrieben, deren Eigenschaften bezüglich Bonbondreheinschlag (Twistverhalten) verbessert ist.

In EP-A 479 101 wird ebenfalls eine harzhaltige Polypropylenfolie beschrieben, deren Twisteigenschaft verbessert ist.

In EP-A 488 010 wird eine harzhaltige, metallisierbare Dreheinschlagfolie beschrieben.

Die verbesserte mechanische Festigkeit einer harzhaltigen Polypropylenfolie wird in der Anmeldung EP-A 406 642 beschrieben.

In EP-A 400 456 wird eine kohlenwasserstoffharzhaltige Polypropylenfolie für die Schrumpfetikettenanwendung beschrieben, und in EP-A 489 373 wird eine kohlenwasserstoffharzhaltige Polypropylenfolie mit verbesserten Schrumpf- und Barriereeigenschaften beschrieben.

Sowohl in EP-247 898 als auch in EP-468 333 wird eine erhebliche Verbesserung der Barrierewirkung gegen Wasserdampf (maximal 50 %) nur durch den Einsatz großer Mengen Kohlenwasserstoffharz (10 bis 40 Gew.-%, bezogen auf die Folie) erreicht.

Große Mengen Kohlenwasserstoffharz führen allerdings zu großen Werten der Globalmigration. Die Globalmigration ist ein Maß für die Gesamtmenge der Teilchen, welche beim Kontakt Folie/(Füllgut insbesondere Lebensmittel) aus der Folie in das Füllgut wandern.

Hinzu kommt, daß die hochprozentig kohlenwasserstoffharzhaltigen Folien aufgrund der Klebrigkeit dieser Harze besonders schlechte Gleiteigenschaften aufweisen. Daher erwies es sich als notwendig, eine Folie zu fertigen, die gute Sperreigenschaften für Wasserdampf hat und trotzdem einen möglichst niedrigen Harzgehalt aufweist.

Gelöst wird diese Aufgabe durch eine Folie gemäß Patentanspruch 1. Bevorzugte Merkmale bestehen darin, daß die Basisschicht aus Polypropylen, zusätzlich ein Kohlenwasserstoffharz, in einer Menge von 1 bis 40 Gew.-%, insbesondere 5 bis 30 Gew.-%, (alle hier und im folgenden angegebenen Gew.-%-Angaben beziehen sich auf die jeweilige Schicht) enthält.

Bevorzugt wird für die Basisschicht ein hochisotaktisches Polypropylen mit einem Schmelzpunkt von 160°C bis 170°C eingesetzt, welches dadurch gekennzeichnet ist, daß die Isotaktizität größer als 94 % ist. (Meßmethode: ¹³C-NMR; J.C. Randall, J. Polym. Sci.: J. Polym. Phys. Ed. 12, 703-712 (1974) und gleiche Zeitschrift: 14, 1693-1700 (1976).)

Bei dem niedrigmolekularen Kohlenwasserstoffharz handelt es sich um ein Harz, das dadurch gekennzeichnet ist, daß der Erweichungspunkt > 130°C ist. (ASTM E 28) In der Literatur (s.o. EP-247 898) ist bekannt, daß das Einarbeiten eines solchen Harzes zur Verbesserung der Wasserdampfbarriereeigenschaften, der optischen Eigenschaften und der mechanischen Eigenschaften führt. Die Kohlenwasserstoffharze lassen sich in drei Gruppen gliedern: die Petroleumharze, die Terpenharze und die Harze aus dem Kohlenteer. Aus der Gruppe der Petroleumharze werden bevorzugt die Cyclopentadien-, die Styrol und Methylstyrolharze eingesetzt. Es handelt sich um oligomere Polymere oder Copolymere mit Molmassen, die kleiner als 2.000 g/mol sind. Da die Polypropylenfolien gewöhnlicherweise farblos, transparent gefertigt werden, ist es notwendig, die Harze in Gegenwart eines Katalysators möglichst vollständig zu hydrieren. Die Harze der Terpengruppe enthalten im wesentlichen oligomere, hydrierte Polymere aus den Monomeren Pinen, β-Pinen und Dipenten (D, L Limonen) und werden auch zur Modifikation von Polypropylen eingesetzt. Für die Verbesserung der Wasserdampfbarriere des Polypropylens eignen sich ganz besonders die hydrierten oligomeren Cyclopentadienharze (HOCP), deren Erweichungspunkt größer oder gleich 130°C ist.

Die Mantelschichten sind frei von Kohlenwasserstoffharz und enthalten ein hochisotaktisches Polypropylen, welches dadurch gekennzeichnet ist, daß die Isotaktizität größer als 94 % (¹³C-Methode s.o.) ist. Die Dicke der Mantelschichten liegt zwischen 0,5 µm und 2 µm.

Um eine gute Maschinengängigkeit bei guten Siegeleigenschaften zu gewährleisten, ist es notwendig, die Siegel- bzw. Deckschichten mit Additiven auszustatten. Unter den zahlreichen, für solche Schichten eingesetzten Materialien, werden folgende bevorzugt eingesetzt:
- statistische Propylen/Ethylen-Copolymere
- statistische Propylen/Buten(1)-Copolymere
- statistische Propylen/Ethylen/Olefin-Terpolymere
- Mischungen aus zwei oder drei der vorstehenden Polymere.

Besonders bevorzugt wird ein Copolymer, welches 90 bis 99 % Polypropylen und 1,0 bis 10 % Polyethylen enthält. Dieses Siegelschichtmaterial ist dadurch gekennzeichnet, daß es einen Schmelzpunkt von 110°C bis 150°C, insbesondere 120°C bis 140°C, hat.

Als Additive, die zur besseren Maschinengängigkeit beitragen, werden Antistatika, Gleitmittel und Antiblockmittel eingesetzt.

Antistatika sind Substanzen, die über einen hydrophilen Molekülteil und einen langkettigen hydrophoben Kohlenwasserstoffrest verfügen. In den Folien richten sich diese Substanzen so aus, daß der hydrophile Teil an der Oberfläche der Folie Wasser anlagern kann, woraus eine Erniedrigung des Oberflächenwiderstandes resultiert, die letztlich die antistatische Wirkung ausmacht. Bevorzugt werden die ethoxylierten Amine eingesetzt, insbesondere N-(C₁₂-C₁₈-alkyl)-N',N''-bis(2-hydroxyethyl)-amine verbinden die Forderung nach der lebensmittelrechtlichen Unbedenklichkeit und antistatischer Wirkung.

Als Gleitmittel werden Amide der Carbonsäuren eingesetzt, Typische Beispiele sind Erucasäureamid und Ölsäureamid. Weiterhin werden Polymere aus der Gruppe der Polyalkylsiloxane eingesetzt.

Bevorzugte Antiblockmittel sind Siliciumdioxid, Silikate oder Polymere, die nicht mit den Deckschichtrohstoffen mischbar sind (z.B. Polycarbonat, Polyamid, Polymethylmethacrylat).

Überraschenderweise war, bei gegebener Sperrwirkung gegen Wasserdampf, der benötigte Anteil an Kohlenwasserstoffharz im Zusammenwirken mit hochisotaktischem Polypropylen erheblich niedriger als bei dem System Kohlenwasserstoffharz/isotaktisches Polypropylen.

Die erfindungsgemäßen Folien können nach den üblichen Verfahren wie Laminierung, Beschichtung oder Schmelzcoextrusion hergestellt werden. Nach der Extrusion und der Verfestigung des Dickfilms auf der Gießwalze wird der Film in Laufrichtung (längs) mit einem Verstrekkungsquotienten von 4/1 bis 7/1 bei einer Temperatur von 120°C bis 150°C gereckt. Das Reckverhältnis in Querrichtung liegt vorzugsweise zwischen 8/1 und 12/1 und das Querrecken des Films wird bei einer Temperatur zwischen 130°C und 170°C vorgenommen. Die nachfolgende Thermofixierung wird vorzugsweise bei 1°C bis 40°C unter der Querrecktemperatur durchgeführt. Um die Affinität der weitgehend unpolaren Folienoberfläche zu den Druckfarben zu gewährleisten, ist es nötig, die Folie einer Corona-(Sprüh) Vorbehandlung zu unterziehen. Dabei wird der Luftsauerstoff in Form von Carbonyl-, Epoxid-, Ether- oder Alkoholgruppen auf der Folienoberfläche eingelagert. Weitere Methoden der Vorbehandlung von Polypropylenfolien sind die Flamm-, Plasma- und Fluorvorbehandlung.

### Beispiel 1

Mittels dem oben beschriebenen Verfahren wurde eine biaxial orientierte Folie (Flächenreckverhältnis: 45/1; Längsrecktemperatur: 142°C; Querrecktemperatur: 160°C) hergestellt, die folgenden Aufbau aufwies:
- Gesamtdicke:: 25 µm

### Deckschichten:

- Dicke:: 1 µm
- Material:: Propylen/Ethylencopolymer mit 3,5 % Ethylenanteil, MFI: 5,0 g/10 min.
0,25 % SiO₂, mittlere Teilchengröße: 2,5 µm
0,7 % Polydimethylsiloxan (Viskosität: 106 cSt; DIN: 53019/25°C)

### Mantelschichten:

- Dicke:: 1 µm
- Material:: hochisotaktisches Polypropylen, Isotaktizität: 97 %

### Kernschicht:

- Dicke:: 21 µm
- Material:: 87 % Polypropylen, Isotaktizität: 97 % 13 % Kohlenwasserstoffharzmasterbatch (auf Polypropylenbasis mit 50 % Harzanteil) mit einem Erweichungspunkt von 140°C, wobei das Kohlenwasserstoffharz ein hydriertes oligomeres Cyclopentadienharz ist.

### Beispiel 2

Es wurde eine Folie gefertigt wie in Beispiel 1, jedoch betrug die Dicke der Kernschicht dieser Folie 26 µm. (Gesamtdicke: 30 µm)

### Beispiel 3 (Vergleich)

Es wurde eine Folie gefertigt wie in Beispiel 1, jedoch war diese Folie frei von Kohlenwasserstoffharz.

### Vergleichsbeispiel 1

Es wurde eine Folie gefertigt wie in Beispiel 1, jedoch wurde ein Polypropylen sowohl in der Kernschicht als auch in den Mantelschichten mit der Isotaktizität von 94 % verwendet. Außerdem war die Kernschicht mit 30 % des Kohlenwasserstoffharzmasterbatches aus Beispiel 1 ausgestattet.

### Vergleichsbeispiel 2

Es wurde eine Folie gefertigt wie in Vergleichsbeispiel 1, jedoch betrug die Dicke der Kernschicht 26 µm.

### Vergleichsbeispiel 3

Es wurde ein Folie gefertigt wie in Vergleichsbeispiel 1, jedoch war die Folie frei von Kohlenwasserstoffharz.

Folgende Tabelle zeigt, daß eine Folie des erfindungsgemäßen Typs bezüglich der benötigten Kohlenwasserstoffharzmenge bei vorgegebener Wasserdampfsperrwirkung erhebliche Vorteile hat.

| | Wddu/g/m²d |
|---|---|
| Beispiel 1 | 0,61 |
| Beispiel 2 | 0,50 |
| Beispiel 3 (Vergleich) | 0,85 |
| Vergleichsbeispiel 1 | 0,63 |
| Vergleichsbeispiel 2 | 0,52 |
| Vergleichsbeispiel 3 | 1,10 |

### Meßverfahren

### Bestimmung der Wasserdampfdurchlässigkeit:

Die Wasserdampfdurchlässigkeit wurde gemäß DIN 53122, Teil 2, bei 23°C und 85 % relative Luftfeuchtedifferenz bestimmt.

## Patentansprüche

1. Orientierte, insbesondere biaxial orientierte siegelfähige Polypropylenfolie mit verbesserter Wasserdampfsperrwirkung, dadurch gekennzeichnet, daß sie wie folgt aufgebaut ist:
A B C B A
a) wobei C die Basisschicht, aus hochisotaktischem Polypropylen, das eine Isotaktizität > 94 % hat und einem Kohlenwasserstoffharz ist, das eine Molmasse bis zu etwa 2.000 g/mol aufweist und einen Erweichungspunkt über 130°C hat.
b) und B zwei Kohlenwasserstoffharz-freien Mantelschichten aus hochisotaktischem Polypropylen mit einer Isotaktizität > 94 % sind, wobei das Verhältnis der Dicke der Mantelschicht zur Dicke der Basisschicht zwischen 0,01 und 0,1 liegt.
c) wobei A zwei Deckschichten aus einem heißsiegelbaren Polyolefin-, Homo-, Co- oder Terpolymer sind, wobei diese Deckschichten mindestens ein Antiblockmittel, ein Gleitmittel und ein Antistatikum enthalten.

2. Siegelfähige Folie nach dem Anspruch 1, dadurch gekennzeichnet, daß die Basisschicht ein Kohlenwasserstoffharz aus der Gruppe der Petroleumharze, Terpenharze oder Kohlenteerharze enthält.

3. Siegelfähige Folie nach dem Anspruch 2, dadurch gekennzeichnet, daß das Kohlenwasserstoffharz ein hydriertes, oligomeres Cyclopentadienharz ist.

4. Siegelfähige Folie nach den Ansprüchen 1 bis 3, dadurch gekennzeichnet, daß die Deckschichten im wesentlichen aus
- einem statistischen Propylen/Ethylen-Copolymer
- einem statistischen Propylen/Buten(1)-Copolymer
- einem statistischen Propylen/Ethylen/Olefin-Terpolymer
- Mischungen aus zwei oder drei der vorstehenden Polymere
bestehen.

5. Siegelfähige Folie nach den Ansprüchen 1 bis 4, dadurch gekennzeichnet, daß die Deckschichten als Antiblockmittel Siliciumdioxid, Calciumcarbonat, Polymethylmethacrylat, Polycarbonat, Silicon oder HDPE (High-Density-Poly-Ethylen) enthalten.

6. Siegelfähige Folie nach den Ansprüchen 1 bis 5, dadurch gekennzeichnet, daß die Basisschicht und/oder die Deckschichten ein Gleitmittel enthalten.

7. Siegelfähige Folie nach den Ansprüchen 1 bis 6, dadurch gekennzeichnet, daß die Basisschicht und/oder die Deckschichten ein Antistatikum enthalten.

8. Folie nach einem der Ansprüche 1 bis 7, dadurch gekennzeichnet, daß sie ein- oder beidseitig corona-, flamm-, plasma- oder fluorvorbehandelt ist.

9. Verwendung der siegelfähigen Folie nach einem oder mehreren der Ansprüche 1 bis 9 als Verpackungsmaterial.

## Claims

1. An oriented, in particular biaxially oriented, sealable polypropylene film having an improved barrier action to water vapour, characterized in that it has the following structure:
A B C B A
a) wherein C is a base layer of highly isotactic polypropylene having an isotacticity of >94% and a hydrocarbon resin having a molecular weight of up to about 2,000 g/mol and a softening point above 130°C,
b) wherein B represents two jacket layers, which are free from hydrocarbon resin, of highly isotactic polypropylene having an isotacticity of >94%, the ratio of the thickness of the jacket layer to the thickness of the base layer being between 0.01 and 0.1, and
c) wherein A represents two surface layers of a heat-sealable polyolefin, homo-, co- or terpolymer, said surface layers comprising at least one antiblocking agent, a lubricant and an antistatic agent.

2. A sealable film according to Claim 1, characterized in that the base layer comprises a hydrocarbon resin from the group consisting of petroleum resins, terpene resins or coal tar resins.

3. A sealable film according to claim 2, characterized in that the hydrocarbon resin is a hydrogenated oligomeric cyclopentadiene resin.

4. A sealable film according to claims 1 to 3, characterized in that the surface layers substantially comprise
- a random propylene/ethylene copolymer
- a random propylene/1-butene copolymer
- a random propylene/ethylene/olefin terpolymer
- mixtures of two or three of the above polymers.

5. A sealable film according to claims 1 to 4, characterized in that the surface layers comprise silicon dioxide, calcium carbonate, polymethyl methacrylate, polycarbonate, silicone or HDPE (high-density polyethylene) as the antiblocking agent.

6. A sealable film according to claims 1 to 5, characterized in that the base layer and/or the surface layers comprise a lubricant.

7. A sealable film according to claims 1 to 6, characterized in that the base layer and/or the surface layers comprise an antistatic agent.

8. A film according to one of claims 1 to 7, characterized in that it is pretreated on one or both sides by corona, flame, plasma or fluorine pretreatment.

9. Use of the sealable film according to one or more of claims 1 to 8 as a packaging material.

## Revendications

1. Feuille de polypropylène apte au scellement, orientée, en particulier soumise à une orientation biaxiale, possédant un effet amélioré de blocage de la vapeur d'eau, caractérisée en ce qu'elle possède la composition ci-après:
A B C B A
a) où C représente la couche de base constituée par un polypropylène à teneur isotactique élevée, qui possède une isotacticité > 94%, et par une résine d'hydrocarbure qui présente une masse molaire allant jusqu'à environ 2000 g/mole et qui possède un point de ramollissement supérieur à 130°,
b) et B représente deux couches d'enveloppe exemptes de résine d'hydrocarbure, constituées de polypropylène à teneur isotactique élevée, dont l'isotacticité est >94%, le rapport de l'épaisseur de la couche d'enveloppe à l'épaisseur de la couche de base se situant entre 0,01 et 0,1,
c) où A représente deux couches de recouvrement constituées d'un homopolymère, d'un copolymère ou d'un terpolymère de polyoléfine thermosoudable, ces couches de recouvrement contenant au moins un agent d'antiblocage, un agent de glissement et un agent antistatique.

2. Feuille apte au scellement selon la revendication 1, caractérisée en ce que la couche de base contient une résine d'hydrocarbure choisie parmi le groupe comprenant les résines de pétrole, les résines terpéniques ou les résines de goudron de houille.

3. Feuille apte au scellement selon la revendication 2, caractérisée en ce que la résine d'hydrocarbure est une résine oligomère hydrogénée de cyclopentadiène.

4. Feuille apte au scellement selon les revendications 1 à 3, caractérisée en ce que les couches de recouvrement sont constituées essentiellement par
- un copolymère statistique de propylène/éthylène
- un copolymère statistique de propylène/butène (1)
- un terpolymère statistique de propylène/éthylène/oléfine
- des mélanges de deux ou trois des polymères indiqués ci-dessus.

5. Feuille apte au scellement selon les revendications 1 à 4, caractérisée en ce que les couches de recouvrement contiennent, à titre d'agent d'antiblocage, du dioxyde de silicium, du carbonate de calcium, du polyméthacrylate de méthyle, du polycarbonate, du silicium ou du HDPE (High-Density-Poly-Ethylen).

6. Feuille apte au scellement selon les revendications 1 à 5, caractérisée en ce que la couche de base et/ou les couches de recouvrement contiennent un agent de glissement.

7. Feuille apte au scellement selon les revendications 1 à 6, caractérisée en ce que la couche de base et/ou les couches de recouvrement contiennent un agent antistatique.

8. Feuille selon une des revendications 1 à 7, caractérisée en ce qu'elle a été soumise, sur une face ou sur les deux faces, à un prétraitement de décharge à effluves négatives, à la flamme, au plasma ou au fluor.

9. Utilisation de la feuille apte au scellement selon une ou plusieurs des revendications 1 à 8, comme matière d'emballage.
